Europäisches Patentamt

European Patent Office

Office européen des brevets

(19)

(11) Numéro de publication : **0 115 717 B1**

(12) **FASCICULE DE BREVET EUROPÉEN**

(45) Date de publication du fascicule du brevet :
09.09.87

(51) Int. Cl.⁴ : **G 01 V 1/22**

(21) Numéro de dépôt : **83402371.5**

(22) Date de dépôt : **08.12.83**

(54) **Dispositif de transmission de signaux par radio et par câble entre un système central de commande et d'enregistrement et des appareils d'acquisition de données.**

(30) Priorité : **22.12.82 FR 8221730**

(43) Date de publication de la demande :
**15.08.84 Bulletin 84/33**

(45) Mention de la délivrance du brevet :
**09.09.87 Bulletin 87/37**

(84) Etats contractants désignés :
**DE GB IT NL**

(56) Documents cités :
**GB-A- 2 105 079**
**US-A- 3 886 494**
**US-A- 4 066 993**
**IEEE TRANSACTIONS ON COMMUNICATIONS TECH-NOLOGY, vol. COM-14, no. 6, décembre 1966, New York (US). G. W. HATCH et al.: "Communications for Large Aperture Seismic Array Project", pages 849-854**

(73) Titulaire : **INSTITUT FRANCAIS DU PETROLE**
**4, Avenue de Bois-Préau**
**F-92502 Rueil-Malmaison (FR)**

(72) Inventeur : **Rialan, Joseph**
**15, rue des Bigots**
**F-92190 Meudon (FR)**
Inventeur : **Thierry, Gérard**
**7, avenue de la Grande Armée**
**F-75016 Paris (FR)**

Jouve, 18, rue St-Denis, 75001 Paris, France

## Description

L'invention a pour objet un dispositif de transmission de signaux entre un système central de commande et d'enregistrement et des appareils d'acquisition de données sismiques, utilisant à la fois des liaisons par câbles et par voie hertzienne.

Le dispositif de transmission selon l'invention concerne plus particulièrement la transmission de signaux entre un système central de commande et des appareils d'acquisition de données sismiques agencés pour transmettre à la fois par radio et par câble de transmission, les signaux sismiques qu'ils ont collectés, numérisés et enregistrés, ces signaux leur étant fournis par des ensembles de capteurs sismiques répartis le long d'un profil sismique à étudier, en réponse aux échos sur des couches réfléchissantes du sous-sol de signaux sismiques engendrés dans le sol par une source d'ébranlements appropriée.

On connaît un système de transmission de données sismiques captées par un ensemble de capteurs répartis sur une grande surface et collectées par une série d'appareils d'acquisition où les données recueillies sont transmises par voie essentiellement hertzienne à une installation téléphonique préexistante, avant d'être acheminées par câble à un centre de calcul proche. Un tel système est décrit dans un article extrait de IEEE Transactions on communication technology, volume COM-14, numéro 6, décembre 1966, pages 849-854 et intitulé « Communications for Large aperture seismic array project ».

Par le brevet US-A-3 886 494, on connaît un système de transmission sismique où une pluralité d'appareils d'acquisition de données sismiques échangent des communications par voie hertzienne avec un système central de commande et d'enregistrement.

Un dispositif adapté à la transmission d'ordres et de données par câbles ou par ondes hertziennes est décrit aussi dans la demande de brevet britannique GB-A-2 105 079 publiée le 16 mars 1983. Il est associé d'une part à une pluralité d'appareils d'acquisition adaptés chacun à communiquer avec un système central de commande et d'enregistrement par radio ou par câble et comporte une pluralité de moyens de connexion amovibles permettant, lorsqu'ils sont en place, de relier chaque appareil à un câble de transmission commun et de neutraliser les moyens d'émission et de réception par radio associés, et d'autre part audit système central de commande et d'enregistrement, ce qui permet à celui-ci de communiquer indifféremment avec chaque appareil d'acquisition par câble ou par radio suivant le type de liaison effectivement utilisé. Ces appareils d'acquisition associés à leurs moyens d'émission et de réception par radio et leurs moyens de connexion amovibles particuliers sont disposés dans des boîtiers ou des bouées déposés sur le terrain à une certaine distance les uns des autres et reliés aux récepteurs sismiques.

Les appareils d'acquisition ayant collecté les données fournies par les capteurs sismiques qui leur sont respectivement associés, le système central de commande et d'enregistrement envoie des ordres de transmission successivement à tous les appareils d'acquisition pour qu'ils transmettent les signaux collectés sur le câble de transmission commun ou par radio. Les transmissions de données sont effectuées de préférence par voie hertzienne lorsque la qualité des transmissions est suffisante. Mais lorsque le terrain où sont déposés les boîtiers ou bouées est très accidenté ou lorsque des obstacles (forêts épaisses par exemple) s'opposent à la bonne transmission des ondes hertziennes depuis certains boîtiers ou certains groupes de boîtiers particuliers, on doit, de ce fait, connecter ceux-ci par un câble de transmission au système central de commande et d'enregistrement, les autres étant reliés au système central par radio.

Les liaisons par câble sont très fiables quels que soient la nature ou le relief du terrain mais leur mise en place nécessite des opérations de pose et de dépose longues et coûteuses, surtout dans les régions de montagnes ou de marécages.

La connexion sélective des boîtiers ou bouées au câble de transmission commun permet de simplifier notablement la phase d'installation sur le terrain de l'ensemble de réception sismique. Mais, ce système de transmission mixte présente parfois certains inconvénients dans le cas où, par exemple, le nombre de boîtiers pour lesquels les liaisons hertziennes satisfaisantes sont impossibles, est relativement faible et où il est cependant nécessaire de dérouler un câble de transmission, parfois sur de grandes distances, pour les relier au système central, en traversant des zones où les liaisons hertziennes sont satisfaisantes. Ce cas se présente par exemple lorsqu'une partie des boîtiers ou bouées est disposée sur le même versant d'une élévation de terrain que le système central de commande et d'enregistrement, et accessible par voie hertzienne et qu'une autre partie d'entre eux est installée sur le versant opposé et seulement accessible par un câble de transmission. Un tel câble doit en conséquence être mis en place pour franchir l'élévation de terrain et permettre la liaison de ces boîtiers éloignés au système central.

Dans certains cas également, la plupart des boîtiers ou bouées sont disposés dans une zone à l'intérieur de laquelle les transmissions par radio sont satisfaisantes, mais par contre difficilement accessibles depuis le système central de commande et d'enregistrement lorsque celui-ci se trouve en dehors de ladite zone, ce qui oblige également à dérouler un câble de transmission de grande longueur entre ces boîtiers et le système central.

Le dispositif selon l'invention, tel que défini par la revendication 1, est adapté à assurer la transmission de signaux entre une série d'appareils d'acquisition et un système central de commande et d'enregistrement pourvus de moyens de transmission de données par radio et de moyens de transmission par câble de transmission, lorsque les liaisons directes par radio entre le système central et des appareils d'acquisition particuliers de la série, ne peuvent être établies.

Suivant une première variante, l'élément-relais est connecté à une partie de l'ensemble d'appareils d'acquisition par un câble de transmission et relié au système central de commande et d'enregistrement par voie hertzienne.

Le dispositif permet d'éviter dans ce cas le déroulage d'un câble de transmission entre le système central et l'élément-relais.

Suivant une seconde variante, l'élément-relais est connecté au système central de commande et d'enregistrement par un câble de transmission et à une partie au moins de l'ensemble d'appareils d'acquisition par voie hertzienne.

Dans ce cas, le dispositif permet d'éviter le déroulage d'un câble de transmission entre l'élément-relais et une partie des appareils d'acquisition qui sont accessibles par voie hertzienne depuis ledit élément-relais.

D'autres caractéristiques et avantages du dispositif selon l'invention apparaîtront à la lecture de la description de modes de réalisations particuliers et non limitatifs, et en se référant aux dessins annexés sur lesquels :

la figure 1 représente schématiquement le dispositif suivant la première variante,

la figure 2 représente schématiquement le dispositif suivant la seconde variante,

la figure 3 représente l'élément-relais du dispositif suivant la première variante, et

la figure 4 représente l'élément-relais du dispositif suivant la seconde variante.

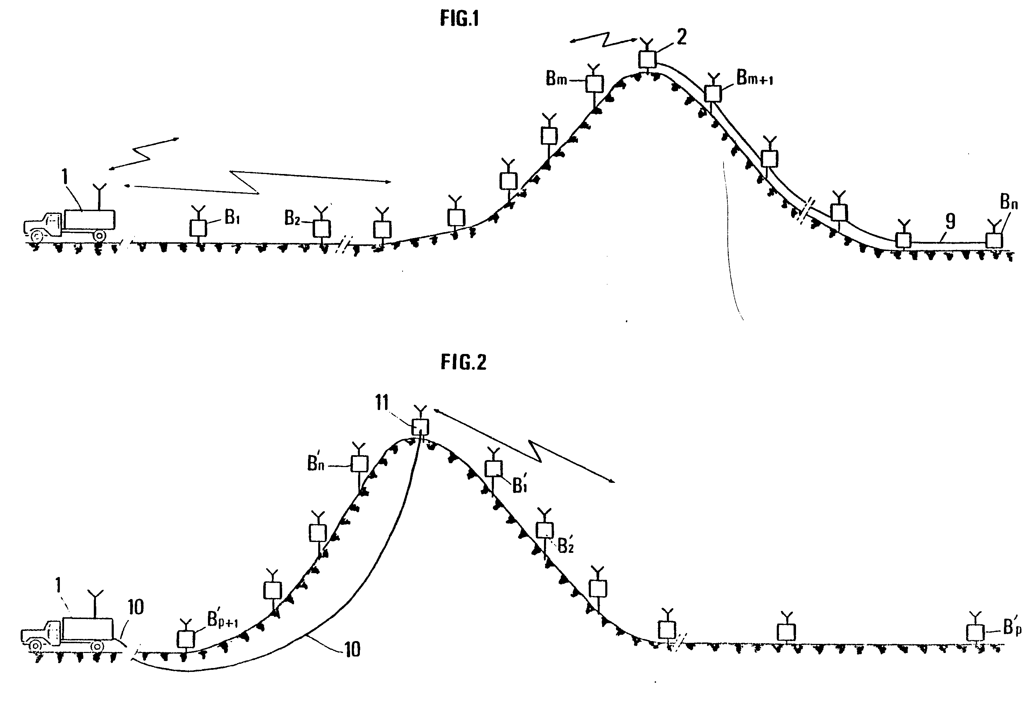

Suivant la première variante représentée à la figure 1, le système central de commande et d'enregistrement 1 installé sur un camion peut communiquer par ondes de radio avec un premier groupe $B_1$, $B_2$... $B_m$ d'une série de n appareils d'acquisition de données sismiques répartis sur le terrain, les autres appareils $B_{m+1}$, $B_{m+2}$... $B_n$ de la série, constituant un second groupe, étant, pour une raison quelconque liée par exemple à la topographie du terrain (cas représenté) ou à sa végétation, plus difficilement accessibles par voie hertzienne.

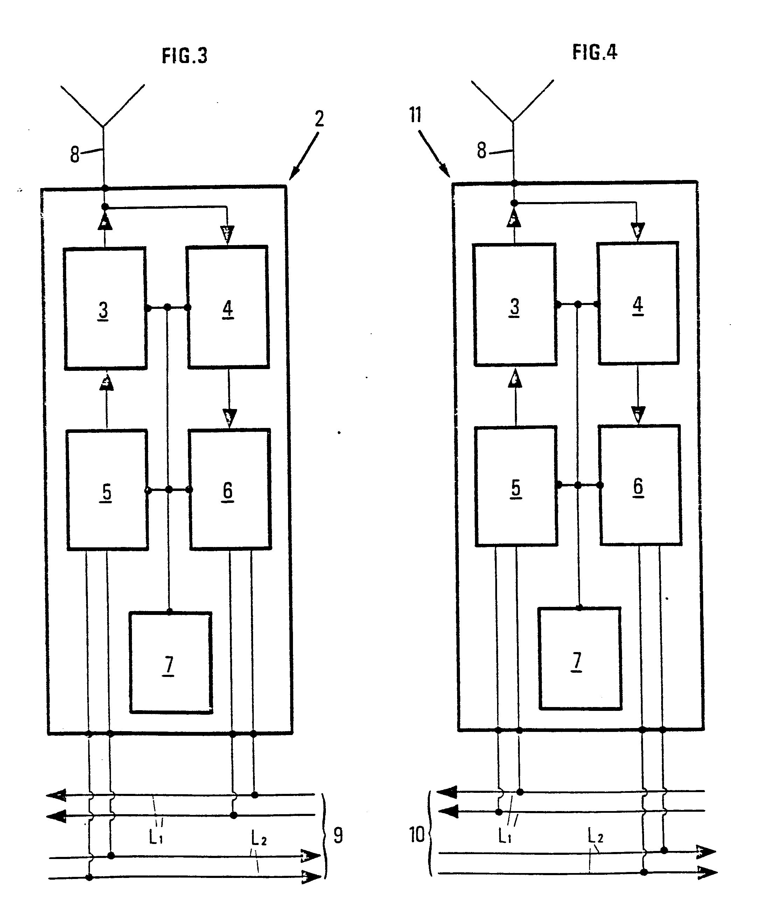

On installe alors le plus près possible des appareils d'acquisition du second groupe mais dans un endroit où les liaisons hertziennes avec le système central sont satisfaisantes, un élément-relais 2 qui comporte (Fig. 3) un émetteur 3 d'ondes de radio et un récepteur 4 d'ondes de radio, un amplificateur adaptateur 5 dont la sortie est connectée à l'entrée de l'émetteur 3, un amplificateur adaptateur 6 dont l'entrée est connectée à la sortie du récepteur 4 et un système d'alimentation électrique 7. La sortie de l'émetteur 3 et l'entrée du récepteur 4 sont connectées à une antenne d'émission et de réception 8.

Un câble de transmission 9 (Fig. 1) comportant deux lignes $L_1$, $L_2$ (Fig. 3) est déroulé pour permettre l'interconnexion des différents appareils $B_{m+1}$ à $B_n$ du second groupe à l'élément-relais 2. La ligne $L_1$ est utilisée pour la transmission de signaux d'ordre aux appareils d'acquisition, la ligne $L_2$ servant à la transmission par lesdits appareils des signaux appropriés en réponse aux signaux d'ordre particuliers qu'ils détectent sur la ligne $L_1$.

L'entrée de l'amplificateur 5 est connectée à la ligne $L_2$ constituée d'une paire de fils conducteurs torsadés. La sortie de l'amplificateur 6 est connectée à la ligne $L_1$ constituée également d'une paire de fils conducteurs torsadés.

Le dispositif fonctionne de la manière suivante.

Le système central de commande et d'enregistrement 1 transmet par radio des ordres codés associés à des signaux d'adresse. Chaque appareil d'acquisition est adapté à ne prendre en compte que les signaux d'ordre correspondant au numéro d'adresse qui lui est affecté. L'élément-relais 2 reçoit par son antenne 8 les signaux de radio provenant du système central ; il les détecte et les adapte avant de les transmettre sur la ligne $L_1$, vers les appareils d'acquisition $B_{m+1}$ à $B_n$ qui lui sont connectés. Si l'ordre transmis concerne un quelconque des appareils $B_{m+1}$ à $B_n$ du second groupe, cet appareil réagit en se connectant sur la ligne $L_2$ du câble de transmission et en transmettant sur celle-ci les signaux appropriés vers l'élément-relais 2, qui les adapte au moyen de l'amplificateur 5 et de l'émetteur 3 afin de les transmettre sous forme d'ondes de radio au système central 1. Les échanges de signaux d'ordre et de données entre le système central et les appareils $B_1$ à $B_m$ du premier groupe s'effectuent exclusivement par voie hertzienne.

Suivant la seconde variante représentée à la figure 2, le système central de commande et d'enregistrement 1 peut communiquer par un câble de transmission 10 à deux lignes $L_1$, $L_2$ avec un élément-relais 11 (Fig. 4) identique à celui de la figure 3, installé dans un endroit tel qu'il peut communiquer par ondes hertziennes avec un groupe de p appareils $B'_1$, $B'_2$...$B'_p$ d'un ensemble de n appareils d'acquisition de données sismiques, les (n-p) autres appareils $B'_{p+1}$...$B'_n$ de la série communiquant directement par ondes radio avec le système central 1. L'élément-relais de la figure 4 se distingue de celui représenté à la figure 3 uniquement par ses connexions sur les lignes $L_1$ et $L_2$ du câble de transmission 10. Dans ce cas, l'entrée de l'amplificateur 5 et la sortie de l'amplificateur 6 sont connectées respectivement aux lignes $L_1$ et $L_2$.

De la même manière que précédemment, le système central 1 transmet par voie hertzienne et sur le câble de transmission 10 des signaux d'ordre associés à des signaux de code définissant des numéros d'adresse. Ces signaux d'ordre sont reçus par voie hertzienne par les appareils d'acquisition $B'_{p+1}$ à $B'_n$, et au moyen de la ligne de transmission $L_1$ du câble de transmission, par l'élément-relais 11 qui les adapte avant de les transmettre sous forme de signaux radio aux

différents appareils $B'_1$, $B'_2$...$B'_p$. Si un des ordres transmis concerne un des p appareils de ce groupe, celui-ci réagit en transmettant par voie hertzienne les signaux appropriés répondant à l'ordre reçu. Ces signaux sont reçus par l'élément-relais 11 qui les adapte avant de les transmettre au système central 1 par l'intermédiaire de la ligne $L_2$ du câble de transmission 10.

On ne sortirait pas du cadre de l'invention en utilisant, dans la seconde variante décrite, le câble de transmission 10 déroulé entre l'élément-relais 11 et le système central 1 pour connecter directement à celui-ci les (n-p) appareils $B'_{p+1}$ à $B'_n$ de la série ou certains d'entre eux si leur disposition relative se prête à de telles connexions, ces appareils se commutant automatiquement sur le câble pour échanger des signaux avec le système central 1.

## Revendications

1. Dispositif de transmission de signaux entre une série d'appareils d'acquisition ($B_1$, $B_2$...$B_n$) adaptés chacun à collecter des signaux provenant d'un capteur sismique ou d'une série de capteurs sismiques répartis sur le terrain, et un système central de commande et d'enregistrement (1) adapté à centraliser l'ensemble des signaux sismiques collectés par les appareils d'acquisition et à les enregistrer, l'appareillage étant constitué par la série d'appareils d'acquisition et par le système central et étant pourvu de moyens de transmission de données par radio et de moyens de transmission par câble de transmission, ledit dispositif permettant d'assurer les communications entre le système central et des appareils d'acquisition particuliers de la série lorsque les liaisons directes par radio ne peuvent être établies, ledit dispositif comportant au moins un élément-relais, caractérisé en ce que les moyens de transmission par câble sont constitués par un câble de transmission, en ce que ledit élément-relais (2, 11) est équipé d'un ensemble d'émission et de réception (3, 4) par radio et de moyens d'adaptation (5, 6) pour transformer les signaux reçus par radio du système central ou des appareils d'acquisition particuliers de la série, et les appliquer au câble de transmission et inversement les signaux reçus par le câble de transmission venant du système central ou des appareils d'acquisition particuliers de la série et les appliquer à l'ensemble d'émission et de réception par radio, et en ce que le câble de transmission connecte l'élément-relais au système central ou aux appareils d'acquisition particuliers de la série, l'élément-relais étant disposé sur le terrain en un emplacement où les liaisons par radio entre celui-ci et le système central ou les appareils d'acquisition particuliers de la série sont régulières.

2. Dispositif de transmission selon la revendication 1, caractérisé en ce que l'élément-relais (2) est connecté à un groupe de la série d'appareils d'acquisition par un câble de transmission (9) et relié au système central de commande et d'enregistrement (1) par voie hertzienne.

3. Dispositif de transmission selon la revendication 1, caractérisé en ce que l'élément-relais est connecté au système central de commande et d'enregistrement (1) par un câble de transmission (10) et à un groupe au moins de la série d'appareils d'acquisition, par voie hertzienne.

4. Dispositif de transmission selon la revendication 1, caractérisé en ce que le câble de transmission comporte deux lignes ($L_1$, $L_2$) de transmission affectées respectivement à la transmission de signaux d'ordre provenant du système central de commande et d'enregistrement et de données provenant des appareils d'acquisition concernés par les signaux d'ordre, et en ce que l'élément-relais comporte un émetteur (3) d'ondes de radio et un récepteur (4) d'ondes de radio dont la sortie et l'entrée respectives sont connectées à une antenne (8) d'émission-réception, et deux amplificateurs-adapteurs (5 et 6) connectés respectivement à l'entrée de l'émetteur (3) et à la sortie du récepteur (4), ces deux amplificateurs adapteurs étant respectivement connectés aux deux lignes du câble de transmission.

5. Dispositif de transmission selon la revendication 3, caractérisé en ce que le câble de transmission (10) est connecté à des appareils d'acquisition d'un second groupe de la série.

## Claims

1. Device for transmitting signals between a series of acquisition devices ($B_1$, $B_2$...$B_n$), each of which being liable to collect signals originating from a seismic sensor or a set of seismic sensors distributed on the field, and a central control and recording system for receiving and recording all of the seismic signals collected by the acquisition devices, the aparratus constituted by the series of acquisition devices and the central control and recording system being equipped with means for transmission of data by radio and means for transmission of data by transmission cable, said device providing for reliable communication between the central system and particular acquisition devices of the series when direct radio transmission therebetween is impossible, the device including at least one relay element, characterized in that the means for transmission of data by transmission cable comprises a transmission cable, the relay element (2, 11) is equipped with a radio transmitter-receiver set (3, 4) and adaptation means (5, 6) for transforming radio signals received from the central system or the particular acquisition devices of the series and applying them to the transmission cable, and conversely for transforming signals received through the transmission cable from the central system or the particular acquisition devices of the series and applying them to the radio transmitter-receiver set, and in that the transmission cable connects the relay element to the central system or the particular acquisition devices of the series, said relay element being disposed on the field at a place where reliable radio communications can be established between the central system and the particular acquisition devices of the series.

2. Transmission device according to claim 1, wherein said relay element (2) is connected to a group of said series of acquisition devices by a transmission cable (9) and communicates with said central system (1) by radio transmission.

3. Transmission device according to claim 1, characterized in that said relay element (2) is connected to the central system (1) by a transmission cable (10) and communicates with at least a first group of the particular acquisition devices of the series by radio transmission.

4. Transmission device according to claim 1, characterized in that the transmission cable comprises two transmission lines $(L_1, L_2)$ which are connected, respectively, for the transmission of command signals generated by said central system and of data signals from the acquisition devices to which the command signals apply, and the relay element (2) includes a radio wave transmitter (3) and a radio wave receiver (4) the respective output and respective input of which are connected to a transmitting-receiving antenna (8) and two filter amplifiers (5, 6) which are connected, respectively, to the input of said transmitter (3) and the output of receiver (4), said two filter amplifiers being connected, respectively, to the two lines of the transmission cable.

5. Transmission device according to claim 3, characterized in that the transmission cable (10) is connected to acquisition devices of a second group of the particular acquisition devices of the series.

**Patentansprüche**

1. Vorrichtung zur Übertragung von Signalen zwischen einer Reihe von Erfassungsgeräten ($B_1$, $B_2$... $B_n$), die so ausgebildet sind, daß sie die von einem seismischen Aufnehmer oder einer Reihe seismischer, über das Gelände verteilter Aufnehmer stammenden Signale sammeln, und einem zentralen Steuer- und Aufzeichnungssystem (1), das so eingerichtet ist, daß es die Gesamtheit der von den Erfassungsgeräten gesammelten seismischen Signale zusammenfaßt und sie aufzeichnet, wobei die Geräteanordnung durch eine Reihe von Erfassungsgeräten sowie durch das zentrale System gebildet wird und wobei Datenübertragungseinrichtungen vermittels Funk sowie Übertragungseinrichtungen vermittels Übertragungskabel vorgesehen sind, wobei die Vorrichtung es ermöglicht, die Nachrichtenverbindungen zwischen dem zentralen System und den besonderen Erfassungsgeräten der Reihe sicherzustellen, wenn die direkten Funkverbindungen nicht hergestellt sind, wobei die Vorrichtung wenigstens eine Relaisstation umfaßt, dadurch gekennzeichnet, daß die Kabelübertragungseinrichtungen durch ein Übertragungskabel gebildet werden, daß die Relaisstation (2, 11) mit einer Funksende- und Empfangsanordnung (3, 4) sowie Anpassungseinrichtungen (5, 6) ausgestattet ist, um die über Funk empfangenen Signale des zentralen Systems oder der besonderen Erfassungsgeräte der Reihe umzuformen und sie an das Übertragungskabel zu legen und umgekehrt die über das Übertragungskabel empfangenen, vom zentralen System oder von den besonderen Erfassungsgeräten der Reihe kommenden Signale umzuformen und sie an die Funksende- und Empfangsanordnung zu legen, und daß das Übertragungskabel die Relaisstation mit dem zentralen System und mit den besonderen Erfassungsgeräten der Reihe verbindet, wobei die Relaisstation im Gelände an einem Ort angeordnet ist, an dem die Funkverbindungen zwischen diesem und dem zentralen System oder den besonderen Erfassungsgeräten der Reihe regulär sind.

2. Übertragungsvorrichtung nach Anspruch 1, dadurch gekennzeichnet, daß die Relaisstation (2) an eine Gruppe der Reihe von Erfassungsgeräten über ein Übertragungskabel (9) angeschlossen und mit dem zentralen Steuer- und Aufzeichnungssystem (1) über den Funkweg verbunden ist.

3. Übertragungsvorrichtung nach Anspruch 1, dadurch gekennzeichnet, daß die Relaisstation mit dem zentralen Steuer- und Aufzeichnungssystem (1) über ein Übertragungskabel (10) und mit wenigstens einer Gruppe der Reihe von Erfassungsgeräten über den Funkweg verbunden ist.

4. Übertragungsvorrichtung nach Anspruch 1, dadurch gekennzeichnet, daß das Übertragungskabel zwei Übertragungsleitungen ($L_1$, $L_2$) umfaßt, denen jeweils die Übertragung von aus dem zentralen Steuer- und Aufzeichnungssystem kommenden Befehlssignalen sowie von Daten zugewiesen ist, die von den Befehlssignalen beaufschlagten Erfassungsgeräten stammen, und daß die Relaisstation einen Funkwellensender (3) und einen Funkwellenempfänger (4), deren Ausgang bzw. Eingang jeweils mit einer Sende-Empfangsantenne (8) verbunden sind, und zwei Anpassungsverstärker (5 und 6) aufweist, die jeweils mit dem Eingang des Senders (3) bzw. mit dem Ausgang des Empfängers (4) verbunden sind, wobei diese beiden Anpassungsverstärker jeweils mit den beiden Leitungen des Übertragungskabels verbunden sind.

5. Übertragungsvorrichtung nach Anspruch 3, dadurch gekennzeichnet, daß das Übertragungskabel (10) mit Erfassungsgeräten einer zweiten Gruppe der Reihe verbunden ist.

**FIG.1**

**FIG.2**

FIG.3

FIG.4

0 115 717

2